# EUROPEAN PATENT SPECIFICATION

(11) **EP 3 742 593 B1**
(45) Date of publication and mention of the grant of the patent: **12.06.2024**
(21) Application number: 18900691.9
(22) Date of filing: 16.01.2018
(51) Int. Cl.: H02M 1/08, H02M 3/00, B60L 50/13, B60L 50/60, B60L 50/61, B60L 58/00, H02M 1/00

(54) **VEHICLE POWER SUPPLY CONTROL CIRCUIT, VEHICLE CONTROL DEVICE, AND VEHICLE POWER SUPPLY CONTROL CIRCUIT CONTROL METHOD**
STEUERSCHALTUNG FÜR FAHRZEUGSTROMVERSORGUNG, FAHRZEUGSTEUERUNGSVORRICHTUNG UND STEUERUNGSVERFAHREN FÜR STEUERSCHALTUNG FÜR FAHRZEUGSTROMVERSORGUNG
CIRCUIT DE COMMANDE D'ALIMENTATION ÉLECTRIQUE DE VÉHICULE, DISPOSITIF DE COMMANDE DE VÉHICULE, ET PROCÉDÉ DE COMMANDE DE CIRCUIT DE COMMANDE D'ALIMENTATION ÉLECTRIQUE DE VÉHICULE

(43) Date of publication of application: 25.11.2020
(73) Proprietor: Shindengen Electric Manufacturing Co., Ltd., Tokyo 100-0004 (JP)
(72) Inventor: YAMAZAKI, Masashi, Hanno-shi, Saitama 357-8585 (JP); KURADATE, Takuya, Hanno-shi, Saitama 357-8585 (JP)
(74) Representative: AWA Sweden AB
(86) International application number: PCT/JP2018/000976
(87) International publication number: WO 2019/142235

(56) References cited:
- JP-A- H02 202 117
- JP-A- 2004 526 397
- JP-A- 2014 086 953
- US-A1- 2011 278 918

## Description

### [Technical Field]

The present invention relates to a vehicle power supply control circuit, a vehicle control device, and a vehicle power supply control circuit control method.

### [Background Art]

Conventionally, for example, in a motorcycle, when a user turns off a main switch to stop an engine, a power supply voltage supplied from a battery and an ACG (a motor generator) is lowered to stop the system. When the battery is open while the system is stopped in this way, the power supply voltage drops faster.

In such a conventional system, a capacitor is connected to the output of the DC-DC converter built in the ECU. Then, after the supply of the power supply voltage to the DC-DC converter is cut off, the output voltage output from the DC-DC converter is held for some time.

Then, until the output voltage of the DC-DC converter is stopped, this output voltage is applied to the gate of the FET that constitutes the driver circuit that controls the ACG, and there is a concern that the FET may operate in the unsaturated region.

Here, for example, Patent Document 1 discloses a semiconductor switch circuit that cuts off a load current. However, the semiconductor switch circuit does not prevent the unsaturated operation of the semiconductor element (MOSFET) that generates the ACG drive current and has the unsaturated region characteristic, based on the power supply voltage. Previous patent literature US 2011/278918 A1 discloses a discharge control apparatus arranged in a power conversion system having high-side switching element and low-side switching element to convert the DC power from the battery to a predetermined type of power. Patent Document 2 discloses a vehicle power supply control circuit.

### [Prior Art Documents]

### [Patent Literature]

[Patent Document 1] JP1990-202117
[Patent Document 2] US2011/0278918 A1

### [Disclosure of the Invention]

### [Problem to be Solved by the Invention]

Therefore, an object of the present invention is to provide a vehicle power supply control circuit capable of preventing unsaturated operation of a semiconductor element, by controlling conduction / interruption between an output of a DC-DC converter, for converting the power supply voltage into a voltage, and the output terminal, for generating a driving current of ACG and outputting a voltage for driving a semiconductor element having an unsaturated region characteristic, based on the power supply voltage.

### [Solution to Problem]

The invention refers to a vehicle power supply control circuit according to claim 1, a vehicle control device comprising a vehicle power supply control circuit according to claim 16, and a vehicle power supply control circuit control method of the vehicle power supply control circuit according to claim 17. Preferred embodiments are defined in the dependent claims.

### [Effects of the Invention]

A vehicle power supply control circuit according to an embodiment according to an aspect of the present invention includes: a first input terminal to which a voltage output from an DC-DC converter configured to convert a power supply voltage is supplied; a second input terminal to which the power supply voltage is supplied; an output terminal configured to output a voltage for controlling semiconductor elements being configured to generate a drive current for a motor generator, the semiconductor elements having unsaturated region characteristics; a switch circuit having one end connected to the first input terminal and another end connected to the output terminal, the switch circuit is configured to turn on based on a signal applied to a control terminal thereof to establish electrical connection between the first input terminal and the output terminal, on the other hand, the switch circuit is configured to turn off based on a signal applied to the control terminal for cutting off between the first input terminal and the output terminal; and a switch controller that is configured to control the switch circuit by applying a signal to the control terminal based on the power supply voltage of the second input terminal.

The switch controller is configured to turn on the switch circuit, when the power supply voltage supplied to the second input terminal rises and becomes equal to or higher than a preset first threshold voltage while the switch circuit is off, and after the power supply voltage rise higher than a second threshold voltage while the switch circuit is on, the switch controller is configured to turn off the switch circuit, when the power supply voltage supplied to the second input terminal drops and becomes less than the second threshold voltage different from the first threshold voltage.

That is, according to the vehicle power supply control circuit of the present invention, the unsaturated operation of the semiconductor element can be prevented by controlling conduction/interruption between the output of the DC-DC converter for converting the power supply voltage into a voltage and the output terminal for outputting a voltage for driving the semiconductor element that generates drive current for the ACG and has unsaturated region characteristics, based on the power supply voltage.

### [Brief Description of the Drawings]

[FIG. 1] FIG. 1 is a diagram showing an example of a configuration of a vehicle control device 1000 according to an embodiment of the present invention.
[FIG. 2] FIG. 2 is a diagram showing an example of a configuration of a vehicle power supply control circuit 100 shown in FIG.1.
[FIG. 3] FIG. 3 is a diagram showing an example of input / output waveforms of the vehicle power supply control circuit 100 shown in FIG. 2.

### [Embodiments for Carrying Out the Invention]

Embodiments of the present invention will now be described with reference to the accompanying drawings.

### [First Embodiment]

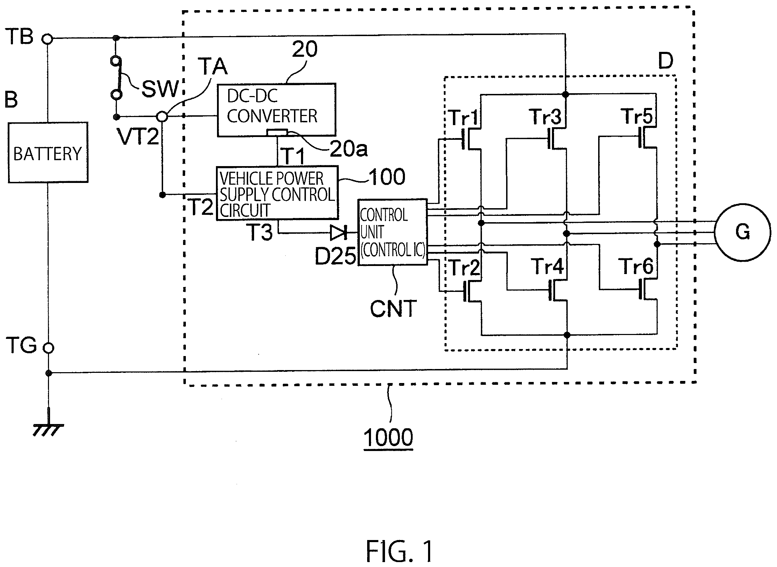

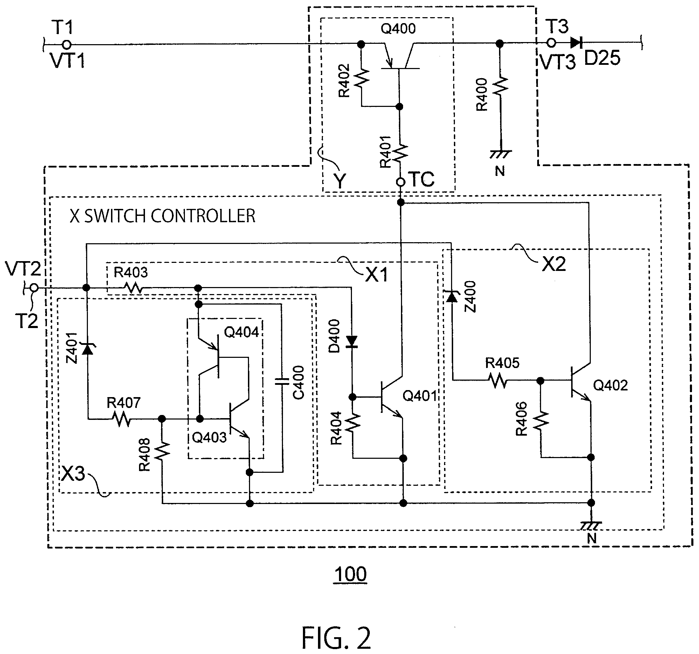

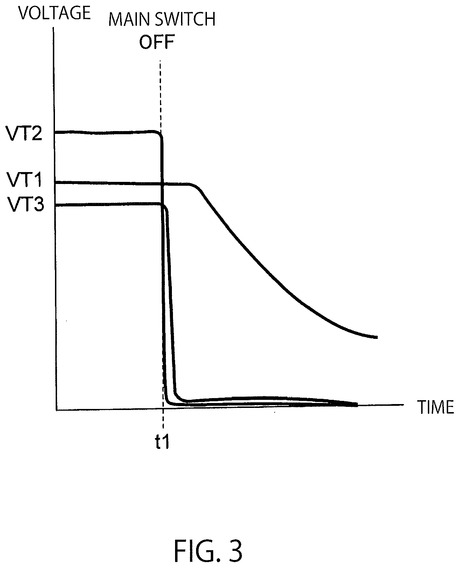

FIG. 1 is a diagram showing an example of a configuration of a vehicle control device 1000 according to an embodiment of the present invention. FIG. 2 is a diagram showing an example of a configuration of a vehicle power supply control circuit 100 shown in FIG.1. FIG. 3 is a diagram showing an example of input / output waveforms of the vehicle power supply control circuit 100 shown in FIG. 2.

For example, a system including a vehicle control device 1000, a main switch SW, a battery B, and a motor generator G shown in FIG. 1 is mounted on a motorcycle.

The motor generator G is connected to, for example, an internal combustion engine (not shown in the Figure) of the two-wheeled vehicle, furthermore drives the internal combustion engine, and rotates by the internal combustion engine to generate electric power.

A battery B is connected between the power supply terminal TB and the ground terminal (that is, the ground potential which is a fixed potential) TG.

This battery B is removable from the power supply terminal TB and the ground terminal TG. For example, when the positive electrode of the battery B is removed from the power supply terminal TB, the battery B becomes open.

Also, the main switch SW is connected between the power supply terminal TB to which the power supply voltage TV2 is applied and the connection terminal TA.

The main switch SW is controlled to be turned on / off by a user operation. The connection terminal TA is connected to the second input terminal T2.

Then, the supply of the power supply voltage VT2 of the power supply terminal TB to the vehicle control device (ECU) 1000 is controlled by the main switch SW of the motorcycle operated by the user.

That is, when the user turns on the main switch SW, the power supply voltage VT2 is supplied from the battery B or the motor generator G (driver circuit D) to the DC-DC converter 20 and the vehicle power supply control circuit 100.

On the other hand, when the user turns off the main switch SW, the supply of the power supply voltage VT2 to the DC-DC converter 20 and the vehicle power supply control circuit 100 is cut off.

Here, the vehicle control device (ECU) 1000 according to the embodiment, for example, as shown in FIG. 1, comprises the DC-DC converter 20, the vehicle power supply control circuit 100, the diode D25, and the control unit (control IC) CNT and a driver circuit D.

The DC-DC converter 20 converts (for example, boosting or stepping up / down) the power supply voltage VT2 supplied from the battery B or the motor generator G (the driver circuit D) through the main switch SW and the connection terminal TA.

The DC-DC converter 20 includes a smoothing capacitor 20a connected to the output of the DC-DC converter 20. According to the time constant of the smoothing capacitor 20a, the output of the DC-DC converter 20 decreases after the power supply voltage VT2 decreases (the output is held for a predetermined time (FIG. 3)).

In the diode D25, for example, as shown in FIGS. 1 and 2, the anode of the diode D25 is connected to the output terminal T3 and the cathode of the diode D25 is connected to the input of the control unit CNT.

This diode D25 rectifies the voltage VT3 output from the vehicle power supply control circuit 100 and outputs the rectified voltage to the control unit CNT.

Further, the driver circuit D includes, for example, as shown in FIG. 1, a plurality of (six in the example of FIG. 1) semiconductor elements Tr1 to Tr6 forming a three-phase bridge circuit. The semiconductor elements Tr1 to Tr6 are MOSFETs, and the voltage for controlling the semiconductor elements Tr1 to Tr6 is the gate voltage of the MOSFETs.

That is, the semiconductor elements Tr1 to Tr6, which are MOSFETs, constitute the driver circuit D of the motor generator G connected to the internal combustion engine of the motorcycle described above.

Then, for example, as shown in FIG. 1, in the driver circuit D, when the motor generator G is driven, the first to sixth MOSFETs Tr1 to Tr6 operate according to the gate control signal output from the control unit CNT. As a result, the driver circuit D supplies the motor generator G with the three-phase AC voltage obtained by converting the DC voltage between the power supply terminal TB and the ground terminal TG to drive the motor generator G.

On the other hand, in the driver circuit D, during regeneration by the motor generator G, the first to sixth MOSFETs Tr1 to Tr6 operates according to the gate control signal output from the control unit CNT. As a result, the driver circuit D converts the counter electromotive voltage output from the motor generator G into a DC regenerative voltage, and the driver circuit D supplies the DC regenerative voltage to between the power supply terminal TB and the ground terminal TG.

Also, the control unit (the control IC) CNT is configured to operate by the power supplied from the battery B or the motor generator G, via the DC-DC converter 20, the vehicle power supply control circuit 100, and the diode D25, in the configuration shown in the example of FIG. 1.

Here, the control unit CNT is configured to control the operation of the first to sixth MOSFETs Tr1 to Tr6, by outputting the gate control signal (the gate voltage) to the gates of the first to sixth MOSFETs Tr1 to Tr6 of the driver circuit D.

Then, in particular, the control unit CNT drives the internal combustion engine by controlling the driver circuit D to drive the motor generator G, based on the voltage VT3 output from the vehicle power supply control circuit 100.

Also, the vehicle power supply control circuit 100 is mounted on a two-wheeled vehicle equipped with an internal combustion engine, as described above.

Here, for example, as shown in FIGS. 1 and 2, the vehicle power supply control circuit 100 comprises a first input terminal T1, a second input terminal T2, an output terminal T3, a switch circuit Y, a switch controller X, and a protection resistor R400.

The first input terminal T1 is electrically connected to the output of the DC-DC converter 20, as shown in FIG. 1, for example.

The first input terminal T1 is supplied with the voltage (eg, boosted voltage) output from the DC-DC converter that voltage-converts (for example, boosts or boosts or lowers) the power supply voltage VT2 supplied from the battery B or the motor generator G via the main switch SW and the terminal TA.

The second input terminal T2 is electrically connected to the input of the DC-DC converter 20 via a connection terminal TA, as shown in FIG. 1, for example.

The power supply voltage VT2 is supplied to the second input terminal T2.

Further, the output terminal T3 outputs a voltage for controlling the semiconductor elements (first to sixth MOSFETs Tr1 to Tr6) that generate a drive current of ACG (motor generator) G and has an unsaturated region characteristic.

Further, for example, as shown in FIG. 2, the protection resistor R400 has one end connected to the output terminal T3, and has the other end connected to the ground terminal N (the ground potential which is a fixed potential).

Further, for example, as shown in FIG. 2, the switch circuit Y has one end connected to the first input terminal T1, has the other end connected to the output terminal T3, and has a control terminal TC.

For example, when the switch circuit Y is turned on based on the signal applied to the control terminal TC, the first input terminal T1 and the output terminal T3 are electrically connected.

On the other hand, the switch circuit Y is adapted to cut off between the first input terminal T1 and the output terminal T3 by turning off based on the signal applied to the control terminal TC.

For example, as shown in FIG. 2, the switch circuit Y includes a switch bipolar transistor Q400, a first switch resistor R401, and a second switch resistor R402.

The emitter of the switch bipolar transistor Q400 is connected to the first input terminal T1, and the collector of the switch bipolar transistor Q400 is connected to the output terminal T3.

As described later, this switch bipolar transistor Q400 has a threshold value set to turn on the switch bipolar transistor Q400 when the first bipolar transistor Q401 turns on or the second bipolar transistor Q402 turns on.

Further, the first switch resistor R401 has one end connected to the base of the switch bipolar transistor Q400, and has the other end connected to the control terminal TC.

The second switch resistor R402 has one end connected to the emitter of the switch bipolar transistor Q400, and has the other end connected to the base of the switch bipolar transistor Q400.

Also, the switch controller X controls the switch circuit Y by applying a signal to the control terminal TC based on the voltage of the second input terminal T2.

For example, the switch controller X turns on the switch circuit Y, when the power supply voltage VT2 supplied to the second input terminal T2 rises and becomes equal to or higher than the preset first threshold voltage with the switch circuit Y turned off. After that, the switch controller X turns off the switch circuit Y, when the power supply voltage VT2 supplied to the second input terminal T2 becomes lower than the second threshold voltage different from the first threshold voltage (the second threshold voltage is higher than the first threshold voltage or lower than the first threshold voltage), after the power supply voltage VT2 further rises.

For example, as shown in FIG. 2, the switch controller X comprises a first control circuit X1, a second control circuit X2, and a third control circuit X3.

Then, the first control circuit X1 controls the switch circuit Y based on the power supply voltage VT2 supplied to the second input terminal T2.

For example, the first control circuit X1 is configured to turn on the switch circuit Y, when the power supply voltage VT2 becomes equal to or higher than the first threshold voltage.

On the other hand, the first control circuit X1 operates so as to turn off the switch circuit Y, when the power supply voltage VT2 becomes lower than the above-mentioned first threshold voltage.

For example, as shown in FIG. 2, the first control circuit X1 has a first bipolar transistor Q401, a first resistor R403, a first diode D400, and a second resistor R404.

The first bipolar transistor Q401 is a first conductivity type (NPN type) bipolar transistor, a collector of the first bipolar transistor Q401 is connected to the control terminal TC, and an emitter of the collector of the first bipolar transistor Q401 is connected to the ground terminal N (ground potential which is a fixed potential).

The threshold value of the first bipolar transistor Q401 is set to turn on the first bipolar transistor Q401, for example, when the power supply voltage VT2 initially rises, by passing the base current through the path from the first resistor R403 to the first diode D400.

Moreover, one end of the first resistor R403 is connected to the second input terminal T2.

The anode of the first diode D400 is connected to the first resistor R403, and the cathode of the first diode D400 is connected to the base of the first bipolar transistor Q401.

Further, the second resistor R404 has one end connected to the base of the first bipolar transistor Q401, and has the other end connected to the ground terminal N (the ground potential which is a fixed potential).

Also, the second control circuit X2 controls the switch circuit Y, based on the power supply voltage VT2 supplied to the second input terminal T2.

For example, the second control circuit X2 turns on the switch circuit Y when the power supply voltage VT2 becomes equal to or higher than the above-mentioned second threshold voltage.

On the other hand, the second control circuit X2 operates to turn off the switch circuit Y, when the power supply voltage VT2 becomes lower than the second threshold voltage.

For example, as shown in FIG. 2, the second control circuit X2 comprises a second bipolar transistor Q402, a first Zener diode Z400, a third resistor R405, and a fourth resistor R406.

The second bipolar transistor Q402 is a first conductivity type (NPN type) bipolar transistor, a collector of the second bipolar transistor Q402 is connected to the control terminal TC, and an emitter of the second bipolar transistor Q402 is connected to the ground terminal N (the ground potential which is a fixed potential).

The threshold value of the second bipolar transistor Q402 is set to turn on the second bipolar transistor Q402, by passing the base current from the first Zener diode Z400 through the path of the third resistor R405, if the power supply voltage VT2 rises further than a voltage when the power supply voltage VT2 initially rises.

The cathode of the first Zener diode Z400 is connected to the second input terminal T2.

Also, the third resistor R405 has one end connected to the anode of the first Zener diode Z400, and has the other end connected to the base of the second bipolar transistor Q402.

Also, the fourth resistor R406 has one end connected to the base of the second bipolar transistor Q402, and has the other end connected to the emitter of the second bipolar transistor Q402.

Also, the third control circuit X3 is configured to control the operation of the first control circuit X1, based on the power supply voltage VT2 supplied to the second input terminal T2.

For example, the third control circuit X3 controls the first control circuit X1 to avoid the switch circuit Y being turned on by the first control circuit X1, when the power supply voltage VT2 becomes equal to or higher than a preset third threshold voltage higher than the above-mentioned second threshold voltage.

The third control circuit X3 comprises, for example, as shown in FIG. 2, a second Zener diode Z401, a fifth resistor R407, a sixth resistor R408, a third bipolar transistor Q403, a fourth bipolar transistor Q404, and a capacitor C400.

The cathode of the second Zener diode Z401 is connected to the second input terminal T2.

Also, the fifth resistor R407 has one end connected to the anode of the second Zener diode Z401.

Further, the sixth resistor R408 has one end connected to the other end of the fifth resistor R407, and has the other end connected to the ground terminal N (the ground potential which is a fixed potential).

The third bipolar transistor Q403 is a first-conductivity-type (NPN-type) bipolar transistor, an emitter of the third bipolar transistor Q403 is connected to the other end of the sixth resistor R408, and a base of the third bipolar transistor Q403 is connected to one end of the sixth resistor R408.

The fourth bipolar transistor Q404 is a second conductivity type (PNP type) bipolar transistor, an emitter of the fourth bipolar transistor Q404 is connected to the anode of the first diode D400 (the other end of the first resistor R403), a collector of the fourth bipolar transistor Q404 is connected to the base of the third bipolar transistor Q403, and a base of the fourth bipolar transistor Q404 is connected to the collector of the third bipolar transistor Q403.

The capacitor C400 has one end connected to the emitter of the fourth bipolar transistor Q404, and has the other end connected to the emitter of the third bipolar transistor Q403.

Next, an example of a control method of the vehicle power supply control circuit 100 having the above configuration will be described.

For example, the switch control unit X turns on the switch circuit Y, when the power supply voltage VT2, supplied to the second input terminal T2, rises and becomes equal to or higher than a preset first threshold voltage.

More specifically, when the power supply voltage VT2 rises (when the power supply voltage VT2 becomes equal to or higher than the first threshold voltage), the switch control unit X turns on the switch bipolar transistor Q400 by the first control circuit X1, by passing the base current through the path from the first resistor R403 to the first diode D400 to turn on the first bipolar transistor Q401, to perform the first input terminal T1 and the output terminal T3 are electrically connected.

That is, when the power supply voltage VT2 rises, the switch control unit X turns on the switch circuit Y, when the power supply voltage VT2 is in a low level.

Then, after the power supply voltage VT2 further rises, the switch control circuit Y turns off the switch circuit Y, when the power supply voltage VT2 supplied to the second input terminal T2 becomes less than the second threshold voltage different from the first threshold voltage (Here, the second threshold voltage is higher than the first threshold voltage).

More specifically, when the power supply voltage VT2 further rises, the base current is supplied from the first Zener diode Z400 to the path of the third resistor R405, the switch control unit Y turns on the switch bipolar transistor Q400 by the second control circuit X2, by turning on the second bipolar transistor Q402. After the switch control unit Y turns on the switch bipolar transistor Q400 by the second control circuit X2 as described above, and then, the power supply voltage VT2 further rises (Here, the voltage rises above the second threshold, which is higher than the first threshold voltage), and the base current flows through the path from the second Zener diode Z401 to the fifth resistor R407, thereby the switch control unit Y turns off the first bipolar transistor Q401 by turning on the third bipolar transistor Q403 and the fourth bipolar transistor Q404.

Here, the switch control unit X turns off the first bipolar transistor Q401 as described above, and then, the switch control unit X turns off the second bipolar transistor Q402 to turn off the switch bipolar transistor Q400 by the second control circuit X2, when the power supply voltage VT2 drops below the above-mentioned second threshold voltage from the state in which the second to fourth bipolar transistors Q402, Q403 and Q404 are on. As a result, the connection between the first input terminal T1 and the output terminal T3 is cut off.

That is, the switch control circuit Y turns off the switch circuit Y, when the power supply voltage VT2 is higher than the first threshold voltage which is less than the second threshold voltage, after the power supply voltage VT2 rises above the second threshold voltage.

Here, as described above, the output voltage output from the DC-DC converter 20 may be held for some time after the supply of the power supply voltage VT2 to the DC-DC converter 20 is cut off by turning off the main switch SW by a user operation.

In such a case, between the output of the DC-DC converter 20 and the output terminal T3, that outputs a voltage for driving the semiconductor devices (MOSFETs) Tr1 to Tr6 generate drive current for the motor generator G and have unsaturated region characteristics, can be quickly cut off by the operation of the vehicle power supply control circuit 100 as described above.

As a result, until the output voltage of the DC-DC converter 20 is stopped, this output voltage is suppressed from being applied to the gates of the semiconductor elements (MOSFETs) Tr1 to Tr6 that form the driver circuit D that controls the motor generator G, and the semiconductor element can be suppressed from operating in the unsaturated region.

That is, according to the vehicle power supply control circuit 100 of the present invention, the unsaturated operation of the semiconductor element can be prevented by controlling conduction/interruption between the output of the DC-DC converter for converting the power supply voltage VT2 into a voltage and the output terminal for outputting a voltage for driving the semiconductor element that generates drive current for motor generator G and has unsaturated region characteristics, based on the power supply voltage VT2.

### [Second Embodiment]

In the above-described first embodiment, as shown in FIG. 2, the third control circuit X3 comprises the second Zener diode Z401, the fifth resistor R407, the sixth resistor R408, the third bipolar transistor Q403, the fourth bipolar transistor Q404, and the capacitor C400.

However, the circuit configured by the third bipolar transistor Q403 and the fourth bipolar transistor Q404 may have another circuit configuration as long as it performs the same operation.

For example, the circuit composed of the third bipolar transistor Q403 and the fourth bipolar transistor Q404 may be replaced with a circuit structure using a semiconductor element such as a thyristor.

A vehicle power supply control circuit according to an embodiment according to an aspect of the present invention includes: a first input terminal T1 to which a voltage output from an DC-DC converter 20 converting a power supply voltage VT2 is supplied; a second input terminal T2 to which the power supply voltage is supplied; an output terminal T3 to output a voltage for controlling semiconductor elements (MOSFET (Tr)) generating a drive current for a motor generator and having unsaturated region characteristics; a switch circuit having one end connected to the first input terminal and the other end connected to the output terminal, the switch circuit is turned on based on a signal applied to a control terminal TC thereof to establish electrical connection between the first input terminal and the output terminal, on the other hand, the switch circuit is turned off based on a signal applied to the control terminal to cuts off between the first input terminal and the output terminal; and a switch controller that controls the switch circuit by applying a signal to the control terminal based on the voltage of the second input terminal. The switch controller turns on the switch circuit, when the power supply voltage supplied to the second input terminal rises and becomes equal to or higher than a preset first threshold voltage while the switch circuit is off, and after that, after the power supply voltage VT2 further rise, the switch controller turns off the switch circuit, when the power supply voltage VT2 supplied to the second input terminal becomes less than a second threshold voltage different from the first threshold voltage.

That is, according to the vehicle power supply control circuit of the present invention, the unsaturated operation of the semiconductor element can be prevented by controlling conduction/interruption between the output of the DC-DC converter for converting the power supply voltage VT2 into a voltage and the output terminal for outputting a voltage for driving the semiconductor element that generates drive current for the ACG and has unsaturated region characteristics, based on the power supply voltage.

### [Explanation of References]

1000 Vehicle control unit (ECU)
100 Vehicle power supply control circuit
20 DC-DC converter
D25 Diode
CNT Control unit (control IC)
D Driver circuit
B Battery
T1 First input terminal
T2 Second input terminal
T3 Output terminal
Y Switch circuit
X Switch controller
R400 Protection resistor
X1 First control circuit
X2 Second control circuit
X3 Third control circuit
Q401 First bipolar transistor
R403 First resistor
D400 First diode
R404 Second resistance
Q402 Second bipolar transistor
Z400 First Zener diode
R405 Third resistance
R406 Fourth resistance
Z401 Second Zener diode
R407 Fifth resistance
R408 Sixth resistance
Q403 Third bipolar transistor
Q404 Fourth bipolar transistor
C400 Capacitor

## Claims

1. A vehicle power supply control circuit (100), comprising:
a first input terminal (T1) to which a voltage output from an DC-DC converter (20) configured to convert a power supply voltage is supplied;
a second input terminal (T2) to which the power supply voltage (VT2) is supplied;
an output terminal (T3) configured to output a voltage for controlling semiconductor elements (Tr1,...,Tr6) being configured to generate a drive current for a motor generator (G), the semiconductor elements (Tr1,...,Tr6) having unsaturated region characteristics;
a switch circuit (Y) having one end connected to the first input terminal (T1) and another end connected to the output terminal (T3), the switch circuit (Y) is configured to turn on based on a signal applied to a control terminal (TC) thereof to establish electrical connection between the first input terminal (T1) and the output terminal (T3), on the other hand, the switch circuit (Y) is configured to turn off based on a signal applied to the control terminal for cutting off between the first input terminal (T1) and the output terminal (T3); and
a switch controller (X) configured to control the switch circuit (Y) by applying a signal to the control terminal based on the power supply voltage (VT2) of the second input terminal (T2),
wherein
the switch controller (X) is configured to turn on the switch circuit (Y), when the power supply voltage (VT2) supplied to the second input terminal (T2) rises and becomes equal to or higher than a preset first threshold voltage while the switch circuit (Y) is off, and
after the power supply voltage (VT2) rise higher than a second threshold voltage while the switch circuit (Y) is on, the switch controller (X) is configured to turn off the switch circuit (Y), when the power supply voltage (VT2) supplied to the second input terminal (T2) drops and becomes less than the second threshold voltage different from the first threshold voltage.

2. The vehicle power supply control circuit (100) according to claim 1, wherein the semiconductor elements are MOSFETs, and the voltage for controlling the semiconductor elements is a gate voltage of the MOSFETs.

3. The vehicle power supply control circuit (100) according to claim 2,
wherein the switch controller (X) comprises:
a first control circuit (X1) configured to operate to turn on the switch circuit (Y) when the power supply voltage (VT2) becomes equal to or higher than the first threshold voltage, and the first control circuit (X1) operates to turn off the switch circuit (Y) when the power supply voltage (VT2) becomes lower than the first threshold voltage;
a second control circuit (X2) configured to operate to turn on the switch circuit (Y) when the power supply voltage (VT2) becomes equal to or higher than the second threshold voltage, and the second control circuit (X2) is configured to operate to turn off the switch circuit (Y) when the power supply voltage (VT2) becomes lower than the second threshold voltage;
a third control circuit (X3) configured to control the operation of the first control circuit (X1) based on the power supply voltage (VT2) supplied to the second input terminal (T2),
wherein the third control circuit (X3) is configured to control the first control circuit (X1) to prevent the switch circuit (Y) from being turned on by the first control circuit (X1), when the power supply voltage (VT2) is equal to or higher than a preset third threshold voltage which is higher than the second threshold voltage.

4. The vehicle power supply control circuit (100) according to claim 3, wherein the first control circuit (X1) includes:
a first bipolar transistor (Q401) being a first conductivity type bipolar transistor, having a collector connected to the control terminal (TC), and having an emitter connected to a fixed potential (N);
a first resistor (R403) having one end connected to the second input terminal (T2);
a first diode (D400) having an anode connected to the first resistor (R403), and having a cathode connected to a base of the first bipolar transistor (Q401); and
a second resistor (R404) having one end connected to a base of the first bipolar transistor (Q401), and having the other end connected to the fixed potential (N).

5. The vehicle power supply control circuit (100) according to claim 4, wherein the second control circuit (X2) includes:
a second bipolar transistor (Q402) being a first conductivity type bipolar transistor, having a collector connected to the control terminal (TC), and having an emitter is connected to the fixed potential (N);
a first Zener diode (Z400) having a cathode connected to the second input terminal (T2);
a third resistor (R405) having one end connected to the anode of the first Zener diode (Z400), and having the other end connected to a base of the second bipolar transistor (Q402); and
a fourth resistor (R406) having one end connected to the base of the second bipolar transistor (Q402), and having the other end connected to the emitter of the second bipolar transistor (Q402).

6. The vehicle power supply control circuit (100) according to claim 5, wherein the third control circuit (X3) includes:
a second Zener diode (Z401) having a cathode connected to the second input terminal (T2);
a fifth resistor (R407) having one end connected to an anode of the second Zener diode (Z401);
a sixth resistor (R408) having one end connected to the other end of the fifth resistor (R407), and having the other end connected to the fixed potential (N);
a third bipolar transistor (Q403) being a first conductivity type bipolar transistor, having an emitter connected to the other end of the sixth resistor (R408), and having a base connected to one end of the sixth resistor (R408);
a fourth bipolar transistor (Q404) being a second conductivity type bipolar transistor having an emitter connected to the anode of the first diode (D400), having a collector connected to the base of the third bipolar transistor (Q403), and having a base connected to a collector of the third bipolar transistor (Q403); and
a capacitor (C400) having one end connected to the emitter of the fourth bipolar transistor (Q404), and having the other end connected to the emitter of the third bipolar transistor (Q403).

7. The vehicle power supply control circuit (100) according to claim 6, wherein the switch circuit (Y) includes:
a switch bipolar transistor (Q400) having an emitter connected to the first input terminal (T1), and having a collector connected to the output terminal (T3);
a first switch resistor (R401) having one end connected to a base of the switch bipolar transistor (Q400), and having another end connected to the control terminal (TC); and
a second switch resistor (R402) having one end connected to the emitter of the switch bipolar transistor (Q400), and having another end connected to the base of the switch bipolar transistor (Q400).

8. The vehicle power supply control circuit (100) according to claim 7,
wherein,
when the power supply voltage initially rises, the switch controller (X) is configured to turn on the switch bipolar transistor (Q400) by the first control circuit (X1) to establish conduction between the first input terminal (T1) and the output terminal (T3), by turning on the first bipolar transistor (Q401) by passing a base current through a path from the first resistor (R403) to the first diode (D400),
then, when the power supply voltage further rises, the switch controller (X) is configured to turn on the switch bipolar transistor (Q400) by the second control circuit (X2), by turning on the second bipolar transistor (Q402) by passing a base current through a path from the first Zener diode (Z400) to the third resistor (R405), and
then, when the power supply voltage further rises, the switch controller (X) is configured to turn off the switch bipolar transistor (Q400), by turning on the third bipolar transistor (Q403) and the fourth bipolar transistor (Q404) by passing a base current through a path from the second Zener diode (Z401) to the fifth resistor (R407).

9. The vehicle power supply control circuit (100) according to claim 7, wherein, when the power supply voltage drops below the second threshold voltage from the state in which the second to fourth bipolar transistors (Q402, Q403, Q404) are configured to be turned on after turning off the first bipolar transistor (Q401), the switch controller (X) is configured to turn off the switch bipolar transistor (Q400) by the second control circuit (X2), by turning off the second bipolar transistor (Q402), to disconnect between the first input terminal (T1) and the output terminal (T3).

10. The vehicle power supply control circuit (100) according to claim 2, wherein the voltage output from the output terminal (T3) is supplied to a control unit (CNT) being configured to drive the semiconductor elements (Tr1,...,Tr6) via a diode (D25).

11. The vehicle power supply control circuit (100) according to claim 2, further comprising a protection resistor (R400) having one end connected to the output terminal (T3) and the other end connected to a fixed potential (N).

12. The vehicle power supply control circuit (100) according to claim 2,
wherein the first input terminal (T1) is electrically connected to an output of the DC-DC converter (20),
wherein the second input terminal (T2) is electrically connected to an input of the DC-DC converter (20), and
wherein the DC-DC converter (20) includes a smoothing capacitor (C400) connected to the output of the DC-DC converter (20).

13. The vehicle power supply control circuit (100) according to claim 2,
wherein the vehicle power supply control circuit (100) is mounted on a motorcycle,
wherein the MOSFETs constitute a driver circuit (D) of the motor generator connected to an internal combustion engine of the motorcycle,
wherein a control unit (CNT) is configured to drive the internal combustion engine by driving the motor generator (G) with the driver circuit (D) based on the output voltage from the vehicle power supply control circuit (100), and
wherein a battery (B) mounted on the motorcycle is connected between a power supply terminal (TB) to which the power supply voltage (VT2) is applied and a fixed potential (N).

14. The vehicle power supply control circuit (100) according to claim 13, wherein the supply of the power supply voltage is controlled by a main switch (SW) of the motorcycle as a two-wheeled vehicle configured to be operated by a user.

15. The vehicle power supply control circuit (100) according to claim 7,
wherein a threshold value of the first bipolar transistor (Q401) is set to turn on the first bipolar transistor (Q401), when the power supply voltage (VT2) initially rises, by passing a base current through a path from the first resistor (R403) to the first diode (D400),
wherein a threshold value of the second bipolar transistor (Q402) is set to turn on the second bipolar transistor (Q402), by passing a base current from the first Zener diode (Z400) through a path of the third resistor (R405), if the power supply voltage rises further than a voltage when the power supply voltage (VT2) initially rises, and
wherein a threshold value of the switch bipolar transistor (Q400) is set to turn on the switch bipolar transistor (Q400), when the first bipolar transistor (Q401) is turned on or the second bipolar transistor (Q402) is turned on.

16. A vehicle control device (1000), comprising:
a DC-DC converter (20) that is configured to convert a power supply voltage (VT2) into a voltage;
a vehicle power supply control circuit (100) to which the voltage output from the DC-DC converter (20) is supplied;
a driver circuit (D) that includes semiconductor elements (Tr1,...,Tr6), the semiconductor elements (Tr1,...,Tr6) being configured to generate a drive current for a motor generator (G), the semiconductor elements (Tr1,...,Tr6) having unsaturated region characteristics; and
a control unit (CNT) that is configured to control the driver circuit (D) based on a voltage output from the vehicle power supply control circuit (100),
wherein the vehicle power supply control circuit (100) comprises:
a first input terminal (T1) to which the voltage output from the DC-DC converter (20) is supplied;
a second input terminal (T2) to which the power supply voltage (VT2) is supplied;
an output terminal (T3) configured to output a voltage for controlling the semiconductor elements (Trl1,...,Tr6) being configured to generate the drive current for the motor generator (G);
a switch circuit (Y) having one end connected to the first input terminal (T1) and another end connected to the output terminal (T3), the switch circuit (Y) is configured to turn on based on a signal applied to a control terminal (TC) thereof to establish electrical connection between the first input terminal (T1) and the output terminal (T3), on the other hand, the switch circuit (Y) is configured to turn off based on a signal applied to the control terminal (TC) for cutting off between the first input terminal (T1) and the output terminal (T3); and
a switch controller (X) that is configured to control the switch circuit (Y) by applying the signal to the control terminal (TC) based on the power supply voltage (VT2) of the second input terminal (T2),
wherein
the switch controller (X) is configured to turn on the switch circuit (Y), when the power supply voltage (VT2) supplied to the second input terminal (T2) rises and becomes equal to or higher than a preset first threshold voltage while the switch circuit (Y) is off, and
after the power supply voltage (VT2) rise higher than a second threshold voltage while the switch circuit (Y) is on, the switch controller (X) is configured to turn off the switch circuit (Y), when the power supply voltage (VT2) supplied to the second input terminal (T2) drops and becomes less than the second threshold voltage different from the first threshold voltage.

17. A vehicle power supply control circuit (100) control method of a vehicle power supply control circuit (100), the vehicle power supply control circuit (100) comprising: a first input terminal (T1) to which a voltage output from an DC-DC converter (20) converting a power supply voltage (VT2) is supplied; a second input terminal (T2) to which the power supply voltage (VT2) is supplied; an output terminal (T3) that outputs a voltage for controlling semiconductor elements (Tr1,...,Tr6) that generate a drive current for a motor generator (G), the semiconductor elements (Tr1,...,Tr6) having unsaturated region characteristics; a switch circuit (Y) having one end connected to the first input terminal (T1) and another end connected to the output terminal (T3), the switch circuit (Y) turns on based on a signal applied to a control terminal (TC) thereof to establish electrical connection between the first input terminal (T1) and the output terminal (T3), on the other hand, the switch circuit (Y) turns off based on a signal applied to the control terminal (TC) for cutting off between the first input terminal (T1) and the output terminal (T3); and a switch controller (X) controls the switch circuit (Y) by applying the signal to the control terminal (TC) based on the power supply voltage (VT2) of the second input terminal (T2),
wherein
the switch controller (X) turns on the switch circuit (Y), when the power supply voltage (VT2) supplied to the second input terminal (T2) rises and becomes equal to or higher than a preset first threshold voltage while the switch circuit (Y) is off, and
after the power supply voltage (VT2) rise higher than a second threshold voltage while the switch circuit (Y) is on, the switch controller (X) turns off the switch circuit (Y), when the power supply voltage (VT2) supplied to the second input terminal (T2) drops and becomes less than the second threshold voltage different from the first threshold voltage.

## Patentansprüche

1. Steuerschaltung (100) für eine Fahrzeugstromversorgung, umfassend:
einen ersten Eingangsanschluss (T1), dem eine Ausgangsspannung von einem Gleichspannungswandler (20) zugeführt wird, der zum Umwandeln einer Stromversorgungsspannung ausgebildet ist;
einen zweiten Eingangsanschluss (T2), dem die Stromversorgungsspannung (VT2) zugeführt wird;
einen Ausgangsanschluss (T3), der dafür ausgebildet ist, eine Spannung zum Steuern von Halbleiterelementen (Tr1,..., Tr6) auszugeben, die ausgebildet sind, einen Ansteuerstrom für einen Motorgenerator (G) zu erzeugen, wobei die Halbleiterelemente (Tr1, ..., Tr6) Kennlinien eines ungesättigten Bereichs aufweisen;
einen Schaltkreis (Y) mit einem Ende, das mit dem ersten Eingangsanschluss (T1) verbunden ist, und einem anderen Ende, das mit dem Ausgangsanschluss (T3) verbunden ist, wobei der Schaltkreis (Y) dafür ausgebildet ist, basierend auf einem an einem Steueranschluss (TC) davon angelegten Signal einzuschalten, um eine elektrische Verbindung zwischen dem ersten Eingangsanschluss (T1) und dem Ausgangsanschluss (T3) herzustellen, wobei der Schaltkreis (Y) andererseits dafür ausgebildet ist, basierend auf einem an dem Steueranschluss angelegten Signal auszuschalten, um die Verbindung zwischen dem ersten Eingangsanschluss (T1) und dem Ausgangsanschluss (T3) zu trennen; und
eine Schaltersteuerung (X), die dafür ausgebildet ist, den Schalterstromkreis (Y) durch Anlegen eines Signals an den Steueranschluss basierend auf der Stromversorgungsspannung (VT2) des zweiten Eingangsanschlusses (T2) zu steuern,
wobei
die Schaltersteuerung (X) dafür ausgebildet ist, den Schalterstromkreis (Y) einzuschalten, wenn die dem zweiten Eingangsanschluss (T2) zugeführte Stromversorgungsspannung (VT2) ansteigt und gleich oder höher als eine voreingestellte erste Schwellenspannung wird, während der Schalterstromkreis (Y) ausgeschaltet ist, und
nachdem die Stromversorgungsspannung (VT2) über eine zweite Schwellenspannung ansteigt, während der Schalterstromkreis (Y) eingeschaltet ist, die Schaltersteuerung (X) dafür ausgebildet ist, den Schalterstromkreis (Y) auszuschalten, wenn die dem zweiten Eingangsanschluss (T2) zugeführte Stromversorgungsspannung (VT2) abfällt und kleiner als die zweite Schwellenspannung wird, die sich von der ersten Schwellenspannung unterscheidet.

2. Steuerschaltung (100) für eine Fahrzeugstromversorgung nach Anspruch 1, wobei die Halbleiterelemente MOSFETs sind und die Spannung zum Steuern der Halbleiterelemente eine Gate-Spannung der MOSFETs ist.

3. Steuerschaltung (100) für eine Fahrzeugstromversorgung nach Anspruch 2,
wobei die Schaltersteuerung (X) umfasst:
eine erste Steuerschaltung (X1), die dafür ausgebildet ist, den Schaltkreis (Y) einzuschalten, wenn die Versorgungsspannung (VT2) gleich oder höher als die erste Schwellenspannung wird, und wobei die erste Steuerschaltung (X1) den Schaltkreis (Y) ausschaltet, wenn die Stromversorgungsspannung (VT2) niedriger als die erste Schwellenspannung wird;
eine zweite Steuerschaltung (X2), die dafür ausgebildet ist, den Schaltkreis (Y) einzuschalten, wenn die Stromversorgungsspannung (VT2) gleich oder höher als die zweite Schwellenspannung wird, und wobei die zweite Steuerschaltung (X2) dafür ausgebildet ist, den Schaltkreis (Y) auszuschalten, wenn die Stromversorgungsspannung (VT2) unter die zweite Schwellenspannung fällt;
eine dritte Steuerschaltung (X3), die dafür ausgebildet ist, den Betrieb der ersten Steuerschaltung (X1) basierend auf der dem zweiten Eingangsanschluss (T2) zugeführten Stromversorgungsspannung (VT2) zu steuern,
wobei die dritte Steuerschaltung (X3) dafür ausgebildet ist, die erste Steuerschaltung (X1) so zu steuern, dass verhindert wird, dass der Schaltkreis (Y) durch die erste Steuerschaltung (X1) eingeschaltet wird, wenn die Stromversorgungsspannung (VT2) gleich oder höher als eine voreingestellte dritte Schwellenspannung ist, die höher als die zweite Schwellenspannung ist.

4. Steuerschaltung (100) für eine Fahrzeugstromversorgung nach Anspruch 3, wobei die erste Steuerschaltung (X1) aufweist:
einen ersten Bipolartransistor (Q401), der ein Bipolartransistor eines ersten Leitfähigkeitstyps ist, dessen Kollektor mit dem Steueranschluss (TC) verbunden ist und dessen Emitter mit einem festen Potential (N) verbunden ist;
einen ersten Widerstand (R403), dessen eines Ende mit dem zweiten Eingangsanschluss (T2) verbunden ist;
eine erste Diode (D400), deren Anode mit dem ersten Widerstand (R403) verbunden ist und deren Kathode mit der Basis des ersten Bipolartransistors (Q401) verbunden ist; und
einen zweiten Widerstand (R404), dessen eines Ende mit einer Basis des ersten Bipolartransistors (Q401) verbunden ist und dessen anderes Ende mit dem festen Potenzial (N) verbunden ist.

5. Steuerschaltung (100) für eine Fahrzeugstromversorgung nach Anspruch 4, wobei die zweite Steuerschaltung (X2) aufweist:
einen zweiten Bipolartransistor (Q402), der ein Bipolartransistor eines ersten Leitfähigkeitstyps ist, dessen Kollektor mit dem Steueranschluss (TC) verbunden ist und dessen Emitter mit dem festen Potential (N) verbunden ist;
eine erste Zenerdiode (Z400), deren Kathode mit dem zweiten Eingangsanschluss (T2) verbunden ist;
einen dritten Widerstand (R405), dessen eines Ende mit der Anode der ersten Zenerdiode (Z400) verbunden ist und dessen anderes Ende mit einer Basis des zweiten Bipolartransistors (Q402) verbunden ist; und
einen vierten Widerstand (R406), dessen eines Ende mit der Basis des zweiten Bipolartransistors (Q402) verbunden ist und dessen anderes Ende mit dem Emitter des zweiten Bipolartransistors (Q402) verbunden ist.

6. Steuerschaltung (100) für eine Fahrzeugstromversorgung nach Anspruch 5, wobei die dritte Steuerschaltung (X3) aufweist:
eine zweite Zenerdiode (Z401), deren Kathode mit dem zweiten Eingangsanschluss (T2) verbunden ist;
einen fünften Widerstand (R407), dessen eines Ende mit einer Anode der zweiten Zenerdiode (Z401) verbunden ist;
einen sechsten Widerstand (R408), dessen eines Ende mit dem anderen Ende des fünften Widerstands (R407) verbunden ist und dessen anderes Ende mit dem festen Potenzial (N) verbunden ist;
einen dritten Bipolartransistor (Q403), der ein Bipolartransistor eines ersten Leitfähigkeitstyps ist, dessen Emitter mit dem anderen Ende des sechsten Widerstands (R408) verbunden ist und dessen Basis mit einem Ende des sechsten Widerstands (R408) verbunden ist;
einen vierten Bipolartransistor (Q404), der ein Bipolartransistor eines zweiten Leitfähigkeitstyps ist, dessen Emitter mit der Anode der ersten Diode (D400) verbunden ist, dessen Kollektor mit der Basis des dritten Bipolartransistors (Q403) verbunden ist, und dessen Basis mit einen Kollektor des dritten Bipolartransistors (Q403) verbunden ist; und
einen Kondensator (C400), dessen eines Ende mit dem Emitter des vierten Bipolartransistors (Q404) verbunden ist und dessen anderes Ende mit dem Emitter des dritten Bipolartransistors (Q403) verbunden ist.

7. Steuerschaltung (100) für eine Fahrzeugstromversorgung nach Anspruch 6, wobei die Schaltschaltung (Y) aufweist:
einen Schaltbipolartransistor (Q400), dessen Emitter mit dem ersten Eingangsanschluss (T1) verbunden ist und dessen Kollektor mit dem Ausgangsanschluss (T3) verbunden ist;
einen ersten Schaltwiderstand (R401), dessen eines Ende mit einer Basis des Schaltbipolartransistors (Q400) verbunden ist und dessen anderes Ende mit dem Steueranschluss (TC) verbunden ist; und
einen zweiten Schaltwiderstand (R402), dessen eines Ende mit dem Emitter des Schaltbipolartransistors (Q400) verbunden ist und dessen anderes Ende mit der Basis des Schaltbipolartransistors (Q400) verbunden ist.

8. Steuerschaltung (100) für eine Fahrzeugstromversorgung nach Anspruch 7,
wobei,
wenn die Versorgungsspannung anfänglich ansteigt, die Schaltersteuerung (X) dafür ausgebildet ist, den Schaltbipolartransistor (Q400) durch die erste Steuerschaltung (X1) einzuschalten, um eine Leitung zwischen dem ersten Eingangsanschluss (T1) und dem Ausgangsanschluss (T3) herzustellen, indem der erste Bipolartransistor (Q401) eingeschaltet wird, indem ein Basisstrom durch einen Pfad von dem ersten Widerstand (R403) zur ersten Diode (D400) geleitet wird,
dann, wenn die Versorgungsspannung weiter ansteigt, die Schaltersteuerung (X) dafür ausgebildet ist, den Schaltbipolartransistor (Q400) durch die zweite Steuerschaltung (X2) einzuschalten, indem der zweite Bipolartransistor (Q402) eingeschaltet wird, indem ein Basisstrom durch einen Pfad von der ersten Zenerdiode (Z400) zum dritten Widerstand (R405) geleitet wird, und
dann, wenn die Versorgungsspannung weiter ansteigt, die Schaltersteuerung (X) dafür ausgebildet ist, den Schaltbipolartransistor (Q400) auszuschalten, indem der dritte Bipolartransistor (Q403) und der vierte Bipolartransistor (Q404) eingeschaltet werden, indem ein Basisstrom durch einen Pfad von der zweiten Zenerdiode (Z401) zum fünften Widerstand (R407) geleitet wird.

9. Steuerschaltung (100) für eine Fahrzeugstromversorgung nach Anspruch 7, wobei, wenn die Stromversorgungsspannung unter die zweite Schwellenspannung abfällt ausgehend von dem Zustand, in dem der zweite bis vierte Bipolartransistor (Q402, 0403, Q404) ausgebildet sind, eingeschaltet zu sein, nach dem Ausschalten des ersten Bipolartransistors (Q401), die Schaltersteuerung (X) dafür ausgebildet ist, den Schalter-Bipolartransistor (Q400) durch die zweite Steuerschaltung (X2) auszuschalten, indem der zweite Bipolartransistor (Q402) ausgeschaltet wird, um die Verbindung zwischen dem ersten Eingangsanschluss (T1) und dem Ausgangsanschluss (T3) zu trennen.

10. Steuerschaltung (100) für eine Fahrzeugstromversorgung nach Anspruch 2, wobei die von dem Ausgangsanschluss (T3) ausgegebene Spannung einer Steuereinheit (CNT) zugeführt wird, die dafür ausgebildet ist, die Halbleiterelemente (Tr1,..., Tr6) eine über Diode (D25) anzusteuern.

11. Steuerschaltung (100) für eine Fahrzeugstromversorgung nach Anspruch 2, ferner umfassend einen Schutzwiderstand (R400), dessen eines Ende mit dem Ausgangsanschluss (T3) und dessen anderes Ende mit einem festen Potenzial (N) verbunden ist.

12. Steuerschaltung (100) für eine Fahrzeugstromversorgung nach Anspruch 2,
wobei der erste Eingangsanschluss (T1) elektrisch mit einem Ausgang des Gleichspannungswandlers (20) verbunden ist,
wobei der zweite Eingangsanschluss (T2) elektrisch mit einem Eingang des Gleichspannungswandlers (20) verbunden ist, und
wobei der Gleichspannungswandler (20) einen Glättungskondensator (C400) aufweist, der mit dem Ausgang des Gleichspannungswandlers (20) verbunden ist.

13. Steuerschaltung (100) für eine Fahrzeugstromversorgung nach Anspruch 2,
wobei die Steuerschaltung (100) für eine Fahrzeugstromversorgung an einem Motorrad montiert ist,
wobei die MOSFETs eine Treiberschaltung (D) des Motorgenerators bilden, der mit einem Verbrennungsmotor des Motorrads verbunden ist,
wobei eine Steuereinheit (CNT) dafür ausgebildet ist, den Verbrennungsmotor anzusteuern, indem der Motorgenerator (G) mit der Treiberschaltung (D) basierend auf der Ausgangsspannung der Steuerschaltung (100) für eine Fahrzeugstromversorgung angesteuert wird, und
wobei eine an dem Motorrad montierte Batterie (B) zwischen einem Stromversorgungsanschluss (TB), an dem die Stromversorgungsspannung (VT2) anliegt, und einem festen Potenzial (N) angeschlossen ist.

14. Steuerschaltung (100) für eine Fahrzeugstromversorgung nach Anspruch 13, wobei die Versorgung mit der Stromversorgungsspannung durch einen Hauptschalter (SW) des Motorrads als Zweiradfahrzeug gesteuert wird, das für die Bedienung durch einen Benutzer ausgebildet ist.

15. Steuerschaltung (100) für eine Fahrzeugstromversorgung nach Anspruch 7,
wobei ein Schwellenwert des ersten Bipolartransistors (Q401) so eingestellt ist, dass der erste Bipolartransistor (Q401) eingeschaltet wird, wenn die Versorgungsspannung (VT2) anfänglich ansteigt, indem ein Basisstrom durch einen Pfad von dem ersten Widerstand (R403) zur ersten Diode (D400) geleitet wird,
wobei ein Schwellenwert des zweiten Bipolartransistors (Q402) so eingestellt ist, dass der zweite Bipolartransistor (Q402) eingeschaltet wird, indem ein Basisstrom von der ersten Zenerdiode (Z400) durch einen Pfad des dritten Widerstands (R405) geleitet wird, wenn die Versorgungsspannung weiter ansteigt als eine Spannung, wenn die Versorgungsspannung (VT2) anfänglich ansteigt, und
wobei ein Schwellenwert des Schaltbipolartransistors (Q400) so eingestellt ist, dass der Schaltbipolartransistor (Q400) eingeschaltet wird, wenn der erste Bipolartransistor (Q401) eingeschaltet wird oder der zweite Bipolartransistor (Q402) eingeschaltet wird.

16. Fahrzeugsteuerungsvorrichtung (1000), umfassend:
einen Gleichspannungswandler (20), der dafür ausgebildet ist, eine Stromversorgungsspannung (VT2) in eine Spannung umzuwandeln;
eine Steuerschaltung (100) für eine Fahrzeugstromversorgung, der die von dem Gleichspannungswandler (20) ausgegebene Spannung zugeführt wird;
eine Treiberschaltung (D), die Halbleiterelemente (Tr1, ..., Tr6) aufweist, wobei die Halbleiterelemente (Tr1, ..., Tr6) dafür ausgebildet sind, einen Ansteuerstrom für einen Motorgenerator (G) zu erzeugen, wobei die Halbleiterelemente (Tr1, ..., Tr6) Kennlinien eines ungesättigten Bereichs aufweisen; und
eine Steuereinheit (CNT), die dafür ausgebildet ist, die Treiberschaltung (D) basierend auf einer von der Steuerschaltung (100) für eine Fahrzeugstromversorgung ausgegebene Spannung zu steuern,
wobei die Steuerschaltung (100) für eine Fahrzeugstromversorgung umfasst:
einen ersten Eingangsanschluss (T1), dem die von dem Gleichspannungswandler (20) ausgegebene Spannung zugeführt wird;
einen zweiten Eingangsanschluss (T2), dem die Stromversorgungsspannung (VT2) zugeführt wird;
einen Ausgangsanschluss (T3), der dafür ausgebildet ist, eine Spannung zum Steuern der Halbleiterelemente (Tr1,..., Tr6) auszugeben, die dafür ausgebildet sind, den Ansteuerstrom für den Motorgenerator (G) zu erzeugen;
einen Schaltkreis (Y), der ein Ende aufweist, das mit dem ersten Eingangsanschluss (T1) verbunden ist, und ein anderes Ende aufweist, das mit dem Ausgangsanschluss (T3) verbunden ist, wobei der Schaltkreis (Y) dafür ausgebildet, basierend auf einem an einem Steueranschluss (TC) davon angelegten Signal einzuschalten, um eine elektrische Verbindung zwischen dem ersten Eingangsanschluss (T1) und dem Ausgangsanschluss (T3) herzustellen, wobei der Schaltkreis (Y) andererseits dafür ausgebildet ist, basierend auf einem an den Steueranschluss angelegten Signal auszuschalten, um die Verbindung zwischen dem ersten Eingangsanschluss (T1) und dem Ausgangsanschluss (T3) zu trennen; und
eine Schaltersteuerung (X), die dafür ausgebildet ist, den Schalterstromkreis (Y) durch Anlegen eines Signals an den Steueranschluss (TC) basierend auf der Stromversorgungsspannung (VT2) des zweiten Eingangsanschlusses (T2) zu steuern,
wobei
die Schaltersteuerung (X) dafür ausgebildet ist, den Schalterstromkreis (Y) einzuschalten, wenn die dem zweiten Eingangsanschluss (T2) zugeführte Stromversorgungsspannung (VT2) ansteigt und gleich oder höher als eine voreingestellte erste Schwellenspannung wird, während der Schalterstromkreis (Y) ausgeschaltet ist, und
nachdem die Stromversorgungsspannung (VT2) über eine zweite Schwellenspannung ansteigt, während der Schalterstromkreis (Y) eingeschaltet ist, die Schaltersteuerung (X) dafür ausgebildet ist, den Schalterstromkreis (Y) auszuschalten, wenn die dem zweiten Eingangsanschluss (T2) zugeführte Stromversorgungsspannung (VT2) abfällt und kleiner als die zweite Schwellenspannung wird, die sich von der ersten Schwellenspannung unterscheidet.

17. Steuerungsverfahren für ein Steuerschaltung (100) für eine Fahrzeugstromversorgung einer Steuerschaltung (100) für eine Fahrzeugstromversorgung, wobei die Steuerschaltung (100) für eine Fahrzeugstromversorgung umfasst: einen ersten Eingangsanschluss (T1), dem eine Ausgangsspannung von einem Gleichspannungswandler (20) zugeführt wird, der eine Versorgungsspannung (VT2) umwandelt; einen zweiten Eingangsanschluss (T2), dem die Stromversorgungsspannung (VT2) zugeführt wird; einen Ausgangsanschluss (T3), der eine Spannung zum Steuern von Halbleiterelementen (Tr1, ..., Tr6) ausgibt, die einen Ansteuerstrom für einen Motorgenerator (G) erzeugen, wobei die Halbleiterelemente (Tr1, ..., Tr6) Kennlinien eines ungesättigten Bereichs aufweisen; einen Schaltkreis (Y), der ein Ende aufweist, das mit dem ersten Eingangsanschluss (T1) verbunden ist, und ein anderes Ende aufweist, das mit dem Ausgangsanschluss (T3) verbunden ist, wobei der Schaltkreis (Y) basierend auf einem an einen Steueranschluss (TC) davon angelegten Signal einschaltet, um eine elektrische Verbindung zwischen dem ersten Eingangsanschluss (T1) und dem Ausgangsanschluss (T3) herzustellen, wobei andererseits der Schaltkreis (Y) basierend auf einem an den Steueranschluss (TC) angelegten Signal ausschaltet, um die Verbindung zwischen dem ersten Eingangsanschluss (T1) und dem Ausgangsanschluss (T3) zu trennen;
und eine Schaltersteuerung (X), die den Schalterstromkreis durch Anlegen eines Signals an den Steueranschluss (TC) basierend auf der Stromversorgungsspannung (VT2) des zweiten Eingangsanschlusses (T2) steuert,
wobei
die Schaltersteuerung (X) den Schalterstromkreis (Y) einschaltet, wenn die dem zweiten Eingangsanschluss (T2) zugeführte Stromversorgungsspannung (VT2) ansteigt und gleich oder höher als eine voreingestellte erste Schwellenspannung wird, während der Schalterstromkreis (Y) ausgeschaltet ist, und
nachdem die Stromversorgungsspannung (VT2) über eine zweite Schwellenspannung ansteigt, während der Schalterstromkreis (Y) eingeschaltet ist, die Schaltersteuerung (X) den Schalterstromkreis (Y) ausschaltet, wenn die dem zweiten Eingangsanschluss (T2) zugeführte Stromversorgungsspannung (VT2) abfällt und kleiner als die zweite Schwellenspannung wird, die sich von der ersten Schwellenspannung unterscheidet.

## Revendications

1. Circuit de commande d'alimentation électrique de véhicule (100), comprenant :
une première borne d'entrée (T1) sur laquelle une tension émise en sortie depuis un convertisseur DC-DC (20) configuré pour convertir une tension d'alimentation électrique est alimentée ;
une seconde borne d'entrée (T2) sur laquelle la tension d'alimentation électrique (VT2) est alimentée ;
une borne de sortie (T3) configurée pour émettre en sortie une tension pour commander des éléments semiconducteurs (Tr1, ..., Tr6) qui sont configurés pour générer un courant de pilotage pour un générateur de moteur (G), les éléments semiconducteurs (Tr1, ..., Tr6) présentant des caractéristiques de région non saturée ;
un circuit de commutation (Y) comportant une extrémité connectée à la première borne d'entrée (T1) et une autre extrémité connectée à la borne de sortie (T3), le circuit de commutation (Y) est configuré pour être activé sur la base d'un signal appliqué sur sa borne de commande (TC) pour établir une connexion électrique entre la première borne d'entrée (T1) et la borne de sortie (T3), par ailleurs, le circuit de commutation (Y) est configuré pour être désactivé sur la base d'un signal appliqué sur la borne de commande pour couper la connexion électrique entre la première borne d'entrée (T1) et la borne de sortie (T3) ; et
un contrôleur de commutation (X) configuré pour commander le circuit de commutation (Y) en appliquant un signal sur la borne de commande sur la base de la tension d'alimentation électrique (VT2) de la seconde borne d'entrée (T2),
dans lequel :
le contrôleur de commutation (X) est configuré pour activer le circuit de commutation (Y) lorsque la tension d'alimentation électrique (VT2) alimentée sur la seconde borne d'entrée (T2) augmente et devient égale ou supérieure à une première tension de seuil prédéfinie tandis que le circuit de commutation (Y) est désactivé, et après que la tension d'alimentation électrique (VT2) a augmenté au-delà d'une deuxième tension de seuil tandis que le circuit de commutation (Y) est activé, le contrôleur de commutation (X) est configuré pour désactiver le circuit de commutation (Y) lorsque la tension d'alimentation électrique (VT2) alimentée sur la seconde borne d'entrée (T2) chute et devient inférieure à la deuxième tension de seuil qui est différente de la première tension de seuil.

2. Circuit de commande d'alimentation électrique de véhicule (100) selon la revendication 1, dans lequel les éléments semiconducteurs sont des MOSFET, et la tension pour commander les éléments semiconducteurs est une tension de grille des MOSFET.

3. Circuit de commande d'alimentation électrique de véhicule (100) selon la revendication 2, dans lequel le contrôleur de commutation (X) comprend :
un premier circuit de commande (X1) configuré pour fonctionner pour activer le circuit de commutation (Y) lorsque la tension d'alimentation électrique (VT2) devient égale ou supérieure à la première tension de seuil, et le premier circuit de commande (X1) fonctionne pour désactiver le circuit de commutation (Y) lorsque la tension d'alimentation électrique (VT2) devient inférieure à la première tension de seuil ;
un deuxième circuit de commande (X2) configuré pour fonctionner pour activer le circuit de commutation (Y) lorsque la tension d'alimentation électrique (VT2) devient égale ou supérieure à la deuxième tension de seuil, et le deuxième circuit de commande (X2) est configuré pour fonctionner pour désactiver le circuit de commutation (Y) lorsque la tension d'alimentation électrique (VT2) devient inférieure à la deuxième tension de seuil ;
un troisième circuit de commande (X3) configuré pour commander le fonctionnement du premier circuit de commande (X1) sur la base de la tension d'alimentation électrique (VT2) alimentée sur la seconde borne d'entrée (T2),
dans lequel le troisième circuit de commande (X3) est configuré pour commander le premier circuit de commande (X1) pour empêcher que le circuit de commutation (Y) ne soit activé par le premier circuit de commande (X1) lorsque la tension d'alimentation électrique (VT2) est égale ou supérieure à une troisième tension de seuil prédéfinie qui est supérieure à la deuxième tension de seuil.

4. Circuit de commande d'alimentation électrique de véhicule (100) selon la revendication 3, dans lequel le premier circuit de commande (X1) inclut :
un premier transistor bipolaire (Q401) qui est un transistor bipolaire d'un premier type de conductivité, comportant un collecteur connecté à la borne de commande (TC), et comportant un émetteur connecté à un potentiel fixe (N) ;
une première résistance (R403) comportant une extrémité connectée à la seconde borne d'entrée (T2) ;
une première diode (D400) comportant une anode connectée à la première résistance (R403) et comportant une cathode connectée à une base du premier transistor bipolaire (Q401) ; et
une deuxième résistance (R404) comportant une extrémité connectée à une base du premier transistor bipolaire (Q401) et comportant une autre extrémité connectée au potentiel fixe (N).

5. Circuit de commande d'alimentation électrique de véhicule (100) selon la revendication 4, dans lequel le deuxième circuit de commande (X2) inclut :
un deuxième transistor bipolaire (Q402) qui est un transistor bipolaire d'un premier type de conductivité, comportant un collecteur connecté à la borne de commande (TC) et comportant un émetteur connecté au potentiel fixe (N) ;
une première diode Zener (Z400) comportant une cathode connectée à la seconde borne d'entrée (T2) ;
une troisième résistance (R405) comportant une extrémité connectée à l'anode de la première diode Zener (Z400) et comportant une autre extrémité connectée à une base du deuxième transistor bipolaire (Q402) ; et
une quatrième résistance (R406) comportant une extrémité connectée à la base du deuxième transistor bipolaire (Q402) et comportant une autre extrémité connectée à l'émetteur du deuxième transistor bipolaire (Q402).

6. Circuit de commande d'alimentation électrique de véhicule (100) selon la revendication 5, dans lequel le troisième circuit de commande (X3) inclut :
une seconde diode Zener (Z401) comportant une cathode connectée à la seconde borne d'entrée (T2) ;
une cinquième résistance (R407) comportant une extrémité connectée à une anode de la seconde diode Zener (Z401);
une sixième résistance (R408) comportant une extrémité connectée à l'autre extrémité de la cinquième résistance (R407) et comportant une autre extrémité connectée au potentiel fixe (N) ;
un troisième transistor bipolaire (Q403) qui est un transistor bipolaire d'un premier type de conductivité, comportant un émetteur connecté à l'autre extrémité de la sixième résistance (R408) et comportant une base connectée à une extrémité de la sixième résistance (R408);
un quatrième transistor bipolaire (Q404) qui est un transistor bipolaire d'un second type de conductivité comportant un émetteur connecté à l'anode de la première diode (D400), comportant un collecteur connecté à la base du troisième transistor bipolaire (Q403) et comportant une base connectée à un collecteur du troisième transistor bipolaire (Q403) ; et
un condensateur (C400) comportant une extrémité connectée à l'émetteur du quatrième transistor bipolaire (Q404) et comportant une autre extrémité connectée à l'émetteur du troisième transistor bipolaire (Q403).

7. Circuit de commande d'alimentation électrique de véhicule (100) selon la revendication 6, dans lequel le circuit de commutation (Y) inclut :
un transistor bipolaire de commutation (Q400) comportant un émetteur connecté à la première borne d'entrée (T1) et comportant un collecteur connecté à la borne de sortie (T3) ;
une première résistance de commutation (R401) comportant une extrémité connectée à une base du transistor bipolaire de commutation (Q400) et comportant une autre extrémité connectée à la borne de commande (TC) ; et
une seconde résistance de commutation (R402) comportant une extrémité connectée à l'émetteur du transistor bipolaire de commutation (Q400) et comportant une autre extrémité connectée à la base du transistor bipolaire de commutation (Q400).

8. Circuit de commande d'alimentation électrique de véhicule (100) selon la revendication 7, dans lequel :
lorsque la tension d'alimentation électrique augmente initialement, le contrôleur de commutation (X) est configuré pour activer le transistor bipolaire de commutation (Q400) au moyen du premier circuit de commande (X1) pour établir une conduction entre la première borne d'entrée (T1) et la borne de sortie (T3), en activant le premier transistor bipolaire (Q401) en faisant passer un courant de base au travers d'une voie depuis la première résistance (R403) jusqu'à la première diode (D400),
puis, lorsque la tension d'alimentation électrique augmente encore, le contrôleur de commutation (X) est configuré pour activer le transistor bipolaire de commutation (Q400) au moyen du deuxième circuit de commande (X2), en activant le deuxième transistor bipolaire (Q402) en faisant passer un courant de base au travers d'une voie depuis la première diode Zener (Z400) jusqu'à la troisième résistance (R405), et
puis, lorsque la tension d'alimentation électrique augmente encore, le contrôleur de commutation (X) est configuré pour désactiver le transistor bipolaire de commutation (Q400) en activant le troisième transistor bipolaire (Q403) et le quatrième transistor bipolaire (Q404) en faisant passer un courant de base au travers d'une voie depuis la seconde diode Zener (Z401) jusqu'à la cinquième résistance (R407).

9. Circuit de commande d'alimentation électrique de véhicule (100) selon la revendication 7, dans lequel, lorsque la tension d'alimentation électrique chute endeçà de la deuxième tension de seuil depuis l'état dans lequel les deuxième à quatrième transistors bipolaires (Q402, Q403, Q404) sont configurés pour être activés après la désactivation du premier transistor bipolaire (Q401), le contrôleur de commutation (X) est configuré pour désactiver le transistor bipolaire de commutation (Q400) au moyen du deuxième circuit de commande (X2), en désactivant le deuxième transistor bipolaire (Q402), pour déconnecter la connexion électrique entre la première borne d'entrée (T1) et la borne de sortie (T3).

10. Circuit de commande d'alimentation électrique de véhicule (100) selon la revendication 2, dans lequel la tension émise en sortie depuis la borne de sortie (T3) est alimentée sur une unité de commande (CNT) qui est configurée pour piloter les éléments semiconducteurs (Tr1, ..., Tr6) via une diode (D25).

11. Circuit de commande d'alimentation électrique de véhicule (100) selon la revendication 2, comprenant en outre une résistance de protection (R400) comportant une extrémité connectée à la borne de sortie (3) et une autre extrémité connectée à un potentiel fixe (N).

12. Circuit de commande d'alimentation électrique de véhicule (100) selon la revendication 2,
dans lequel la première borne d'entrée (T1) est connectée électriquement à une sortie du convertisseur DC-DC (20),
dans lequel la seconde borne d'entrée (T2) est connectée électriquement à une entrée du convertisseur DC-DC (20), et
dans lequel le convertisseur DC-DC (20) inclut un condensateur de lissage (C400) connecté à la sortie du convertisseur DC-DC (20).

13. Circuit de commande d'alimentation électrique de véhicule (100) selon la revendication 2,
dans lequel le circuit de commande d'alimentation électrique de véhicule (100) est monté sur une motocyclette,
dans lequel les MOSFET constituent un circuit de pilote (D) du générateur de moteur connecté à un moteur à combustion interne de la motocyclette,
dans lequel une unité de commande (CNT) est configurée pour piloter le moteur à combustion interne en pilotant le générateur de moteur (G) à l'aide du circuit de pilote (D) sur la base de la tension de sortie en provenance du circuit de commande d'alimentation électrique de véhicule (100), et
dans lequel une batterie (B) montée sur la motocyclette est connectée entre une borne d'alimentation électrique (TB) sur laquelle la tension d'alimentation électrique (VT2) est appliquée et un potentiel fixe (N).

14. Circuit de commande d'alimentation électrique de véhicule (100) selon la revendication 13, dans lequel l'alimentation de la tension d'alimentation électrique est commandée par un commutateur principal (SW) de la motocyclette telle qu'un véhicule à deux roues configuré pour qu'un utilisateur le fasse fonctionner.

15. Circuit de commande d'alimentation électrique de véhicule (100) selon la revendication 7,
dans lequel une valeur de seuil du premier transistor bipolaire (Q401) est définie pour activer le premier transistor bipolaire (Q401) lorsque la tension d'alimentation électrique (VT2) augmente initialement, en faisant passer un courant de base au travers d'une voie depuis la première résistance (R403) jusqu'à la première diode (D400),
dans lequel une valeur de seuil du deuxième transistor bipolaire (Q402) est définie pour activer le deuxième transistor bipolaire (Q402), en faisant passer un courant de base depuis la première diode Zener (Z400) au travers d'une voie de la troisième résistance (R405) si la tension d'alimentation électrique augmente plus qu'une tension lorsque la tension d'alimentation électrique (VT2) augmente initialement, et
dans lequel une valeur de seuil du transistor bipolaire de commutation (Q400) est définie pour activer le transistor bipolaire de commutation (Q400) lorsque le premier transistor bipolaire (Q401) est activé ou que le deuxième transistor bipolaire (Q402) est activé.

16. Dispositif de commande de véhicule (1000), comprenant :
un convertisseur DC-DC (20) qui est configuré pour convertir une tension d'alimentation électrique (VT2) selon une tension ;
un circuit de commande d'alimentation électrique de véhicule (100) sur lequel la tension émise en sortie depuis le convertisseur DC-DC (20) est alimentée ;
un circuit de pilote (D) qui inclut des éléments semiconducteurs (Tr1, ..., Tr6), les éléments semiconducteurs (Tr1, ..., Tr6) étant configurés pour générer un courant de pilotage pour un générateur de moteur (G), les éléments semiconducteurs (Tr1, ..., Tr6) présentant des caractéristiques de région non saturée ; et
une unité de commande (CNT) qui est configurée pour commander le circuit de pilote (D) sur la base d'une tension émise en sortie depuis le circuit de commande d'alimentation électrique de véhicule (100),
dans lequel le circuit de commande d'alimentation électrique de véhicule (100) comprend :
une première borne d'entrée (T1) sur laquelle la tension émise en sortie depuis le convertisseur DC-DC (20) est alimentée ;
une seconde borne d'entrée (T2) sur laquelle la tension d'alimentation électrique (VT2) est alimentée ;
une borne de sortie (T3) configurée pour émettre en sortie une tension pour commander les éléments semiconducteurs (Tr1, ..., Tr6) qui sont configurés pour générer le courant de pilotage pour le générateur de moteur (G) ;
un circuit de commutation (Y) comportant une extrémité connectée à la première borne d'entrée (T1) et une autre extrémité connectée à la borne de sortie (T3), le circuit de commutation (Y) est configuré pour être activé sur la base d'un signal appliqué sur sa borne de commande (TC) pour établir une connexion électrique entre la première borne d'entrée (T1) et la borne de sortie (T3), par ailleurs le circuit de commutation (Y) est configuré pour être désactivé sur la base d'un signal appliqué sur la borne de commande (TC) pour couper la connexion électrique entre la première borne d'entrée (T1) et la borne de sortie (T3) ; et
un contrôleur de commutation (X) qui est configuré pour commander le circuit de commutation (Y) en appliquant le signal sur la borne de commande (TC) sur la base de la tension d'alimentation électrique (VT2) de la seconde borne d'entrée (T2),
dans lequel :
le contrôleur de commutation (X) est configuré pour activer le circuit de commutation (Y) lorsque la tension d'alimentation électrique (VT2) alimentée sur la seconde borne d'entrée (T2) augmente et devient égale ou supérieure à une première tension de seuil prédéfinie tandis que le circuit de commutation (Y) est désactivé, et après que la tension d'alimentation électrique (VT2) a augmenté au-delà d'une deuxième tension de seuil tandis que le circuit de commutation (Y) est activé, le contrôleur de commutation (X) est configuré pour désactiver le circuit de commutation (Y) lorsque la tension d'alimentation électrique (VT2) alimentée sur la seconde borne d'entrée (T2) chute et devient inférieure à la deuxième tension de seuil qui est différente de la première tension de seuil.

17. Procédé de commande de circuit de commande d'alimentation électrique de véhicule (100) d'un circuit de commande d'alimentation électrique de véhicule (100), le circuit de commande d'alimentation électrique de véhicule (100) comprenant : une première borne d'entrée (T1) sur laquelle une tension émise en sortie depuis un convertisseur DC-DC (20) qui convertit une tension d'alimentation électrique (VT2) est alimentée ; une seconde borne d'entrée (T2) sur laquelle la tension d'alimentation électrique (VT2) est alimentée ; une borne de sortie (T3) qui émet en sortie une tension pour commander des éléments semiconducteurs (Tr1, ..., Tr6) qui génèrent un courant de pilotage pour un générateur de moteur (G), les éléments semiconducteurs (Tr1, ..., Tr6) présentant des caractéristiques de région non saturée ; un circuit de commutation (Y) comportant une extrémité connectée à la première borne d'entrée (T1) et une autre extrémité connectée à la borne de sortie (T3), le circuit de commutation (Y) est activé sur la base d'un signal appliqué sur sa borne de commande (TC) pour établir une connexion électrique entre la première borne d'entrée (T1) et la borne de sortie (T3), par ailleurs le circuit de commutation (Y) est désactivé sur la base d'un signal appliqué sur la borne de commande (TC) pour couper la connexion électrique entre la première borne d'entrée (T1) et la borne de sortie (T3) ; et un contrôleur de commutation (X) qui commande le circuit de commutation (Y) en appliquant le signal sur la borne de commande (TC) sur la base de la tension d'alimentation électrique (VT2) de la seconde borne d'entrée (T2),
dans lequel :
le contrôleur de commutation (X) active le circuit de commutation (Y) lorsque la tension d'alimentation électrique (VT2) alimentée sur la seconde borne d'entrée (T2) augmente et devient égale ou supérieure à une première tension de seuil prédéfinie tandis que le circuit de commutation (Y) est désactivé, et après que la tension d'alimentation électrique (VT2) a augmenté au-delà d'une deuxième tension de seuil tandis que le circuit de commutation (Y) est activé, le contrôleur de commutation (X) désactive le circuit de commutation (Y) lorsque la tension d'alimentation électrique (VT2) alimentée sur la seconde borne d'entrée (T2) chute et devient inférieure à la deuxième tension de seuil qui est différente de la première tension de seuil.
